# EUROPEAN PATENT APPLICATION

(11) **EP 4 644 145 A1**
(43) Date of publication of application: **05.11.2025**
(21) Application number: 24919133.9
(22) Date of filing: 18.10.2024
(51) Int. Cl.: B60J 7/08, B60J 7/12

(54) **ROOF TENT FOR VEHICLE, AND VEHICLE**

(30) Priority: 25.01.2024 JP 2024009759
(71) Applicant: Whitehouse Co., Ltd, Nagoya-city, Aichi 465-0024 (JP); Autorex Co.,Ltd, Ulsan 44222 (KR)
(72) Inventor: KIMURA Fumio, Nagoya-city, Aichi 465-0024 (JP); PARK Dong Chan, Ulsan 44222 (KR)
(74) Representative: Gille Hrabal Partnerschaftsgesellschaft mbB Patentanwälte
(86) International application number: PCT/JP2024/037084
(87) International publication number: WO 2025/158727

(57) **Abstract**

A roof tent for a vehicle is a roof tent (6) for a vehicle that includes a tent capable of opening and closing a hole (3) formed in a roof of a vehicle (1). The roof tent (6) for a vehicle comprises a base (4) fixed to a roof edge (7) of a vehicle body (2), a roof main body (8) composed of a metal material and capable of opening and closing an opening (5) of the base (4), a first link mechanism (10, 30) relatively movably coupling the roof main body (8) to the base (4), and a tent part (50) capable of being formed on a vehicle outer side of the opening (5) of the base (4).

## Description

### CROSS-REFERENCES TO RELATED APPLICATIONS

This application is based on Patent Application No. 2024-9759 filed on January 25, 2024, the contents of which are incorporated herein by reference.

### FIELD OF THE INVENTION

The present disclosure relates to a roof tent for a vehicle and a vehicle.

### BACKGROUND ART

In the related art, as a mechanism for opening and closing a roof of an automobile, Patent Document 1 discloses opening/closing links provided on a left and a right sides of an opening/closing roof, left and right cylinders rotatably provided in the vicinity of an opening/closing rotation center axis of the opening/closing roof at one end portion and provided to an opening/closing folding axis of the opening/closing links at the other end side, and a tent with both ends attached to the opening/closing end portion side of the opening/closing roof and to a roof main body.

This disclosure teaches that an air compressor suctions air from an air tank and the suctioned air is supplied to an air cylinder through a cord, thereby operating the opening/closing roof. The opening/closing roof is disclosed as being composed of a fiberglass reinforced plastic (FRP) resin material.

### PRIOR ART DOCUMENT

### Patent Document

Patent Document 1: Japanese Laid-Open Patent Application Publication No. 2003-341366

### SUMMARY OF THE INVENTION

A body of a vehicle in the related art is often manufactured using steel from the viewpoint of ensuring rigidity. In a vehicle in which a body with a roof tent is manufactured using steel, an opening is formed in a center of the steel roof of the vehicle, and a roof main body made of fiber-reinforced resin such as FRP or carbon fiber reinforced plastic (CFRP) is provided.

In such a vehicle with a roof tent, an outer wall of the body in which an opening periphery of the roof is composed of steel, and an outer wall of the roof main body composed of a fiber-reinforced resin are made of different materials. Accordingly, with regard to an overall appearance of the body of the vehicle, aesthetics in appearance and impressions given to observers differ. Users dislike the sense of incongruity caused by different material characteristics between the body and the roof main body, and a vehicle with a roof tent that provides an integrated sense of homogeneity has been demanded.

Known roof main bodies made of a fiber-reinforced resin have had difficulty achieving a reduction in weight of the roof main body from the point of ensuring strength of a certain degree or higher. Further, a roof main body made of FRP is problematic in that a surface roughness of the outer wall is rough, resulting in relatively low rigidity, wavy reflection patterns occur on a surface of the roof main body by light reflecting off the outer wall of the roof main body, and the like, impairing quality. An object of the present disclosure is to provide a roof tent having high added value and used in a vehicle, and a vehicle.

A roof tent for a vehicle according to the present disclosure is a roof tent for a vehicle that includes a tent capable of opening and closing a hole formed in a roof of the vehicle. The roof tent for a vehicle comprises a base fixed to a roof edge of a vehicle body, a roof main body composed of a metal material and capable of opening and closing an opening of the base, a first link mechanism relatively movably coupling the roof main body to the base, and a tent part capable of being formed on a vehicle outer side of the opening of the base.

In a roof tent for a vehicle, it was revealed that making the roof main body from a metal achieves various characteristics. The aesthetics in appearance of the roof main body was highly evaluated by specific user groups.

In general, when a vehicle body including a roof tent and the roof main body are constituted from different materials, it is difficult to ensure the homogeneity of characteristics between the vehicle body and the vehicle roof, resulting in a sense of incongruity between the appearance of the vehicle as a whole and the appearance of the roof main body.

The roof tent for a vehicle of the present disclosure solves this problem. When the roof main body is manufactured using a metal material, it is possible to form an outer wall having a high density without wavy light patterns in the appearance of the surface of the roof main body.

According to a roof tent for a vehicle of the present disclosure, in a vehicle body exposed to light such as sunlight, in an appearance of the vehicle body, aesthetics of a smooth surface free of wavy irregularities are maintained, and aesthetics of a smooth surface continuous with an outer wall of the roof main body of the roof tent and an outer wall of the vehicle body are maintained without change with a sense of integration. With regard to an overall appearance of the outer wall of the vehicle, this ensures a harmonious homogeneity in a boundary region between the vehicle body and the roof main body, resulting in aesthetics of the vehicle body and the roof main body, in a closed state, being integrated in the vehicle with a roof tent as a whole without creating a sense of incongruity.

### BRIEF DESCRIPTION OF THE DRAWINGS

The above-described object, other objects, features, and advantages of the present disclosure will become more apparent from the following detailed description with reference to the accompanying drawings. These drawings are as follows:
Fig. 1 is a front view of a vehicle of an embodiment;
Fig. 2 is a perspective view of a base of the embodiment;
Fig. 3 is a perspective view of a roof main body in the embodiment;
Fig. 4 is a perspective view illustrating a frame of a roof tent of the embodiment;
Fig. 5 is a front view illustrating the frame of the roof tent of the embodiment;
Fig. 6 is a front view of a link mechanism according to the embodiment;
Fig. 7 is an enlarged view of a section VII of Fig. 6;
Fig. 8 is an enlarged view of a section VIII of Fig. 6;
Fig. 9 is a perspective view illustrating a tent part in an open state according to the embodiment;
Fig. 10 is an electrical circuit diagram of an actuator according to the embodiment;
Fig. 11A is a view illustrating a comparative form in Comparative Experiment 1 of appearance;
Fig. 11B is a view illustrating this embodiment in Comparative Experiment 1 of appearance;
Fig. 12A is a view illustrating a comparative form in Comparative Experiment 2 of appearance; and
Fig. 12B is a view illustrating this embodiment in Comparative Experiment 2 of appearance.

### EMBODIMENTS OF THE INVENTION

The following describes a roof tent for a vehicle and a vehicle according to an embodiment of the present disclosure with reference to the drawings.

### (Embodiments)

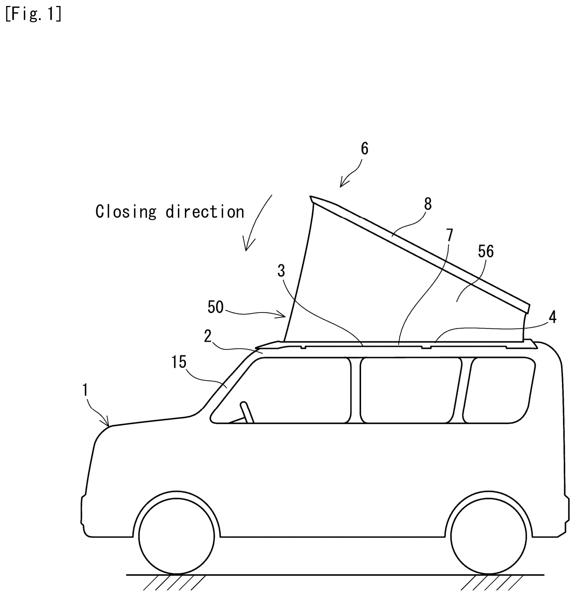

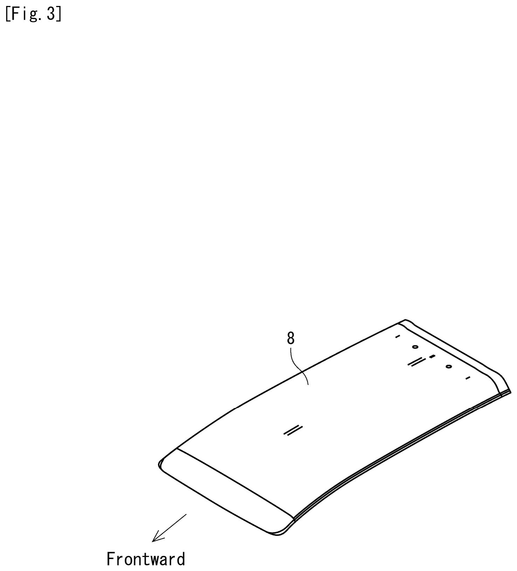

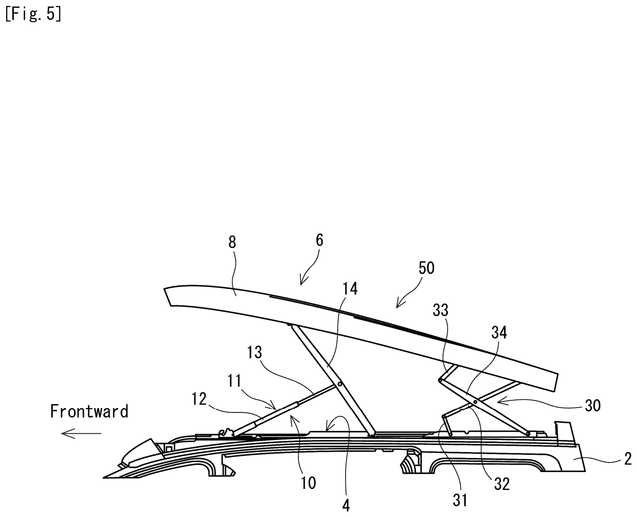

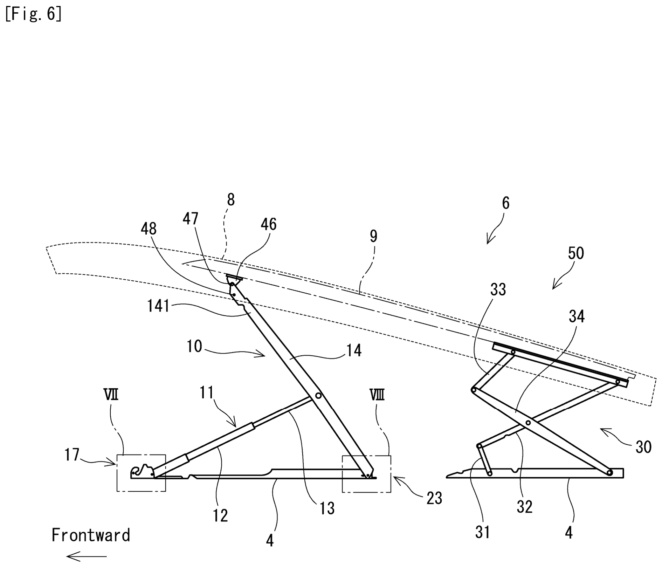

An embodiment of the present disclosure will be described with reference to Figs. 1 to 12B.

A body 2 of a vehicle 1 is made of steel and includes a roof hole 3 in a roof part. A base 4 of a roof tent 6 is fixed to a roof edge 7 forming this roof hole 3. The roof edge 7 is continuous with front pillars 15. The front pillars 15 form a part of a body. The base 4, the roof edge 7, and the front pillars 15 are made of steel. The roof edge 7 is equivalent to a "periphery of a roof main body."

The roof tent 6 is attached to the body 2. Herein, fixed parts of the roof tent 6 refer to the base 4 and the like, and movable parts refer to a link mechanism, an actuator, a roof main body 8, and the like.

When a tent function is not in use, the link mechanism and the actuator, as constituent elements of the roof tent 6, are stored in the vehicle in a closed state of the roof main body 8.

The roof edge 7 of the roof of the body 2, excluding the roof hole 3, is made of steel and is continuous with the front pillars 15 made of steel. A surface continuous from the roof edge 7 to the front pillars 15 is smooth and has a continuous material quality.

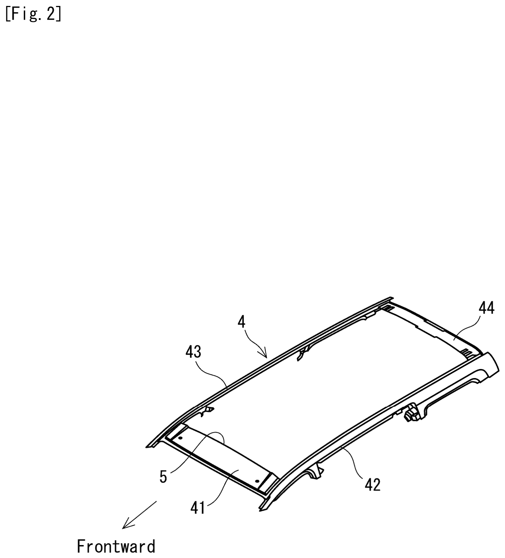

The base 4 is made of steel and forms an opening 5 in a center portion thereof as illustrated in Fig. 2. The base 4 is formed into a rectangular shape by a front edge, lateral edges, and a rear edge, with the opening 5 formed in a center.

The roof main body 8 is made of steel, capable of opening and closing the opening 5 illustrated in Fig. 2, and coupled to the base 4 through the link mechanism, the actuator, and the like described below. The roof main body 8 is made of steel similarly to the front pillars and the roof edge, and forms a smooth surface free of waves and irregularities that is beautiful in appearance. The roof main body 8 has a function of a highly rigid roof of the tent.

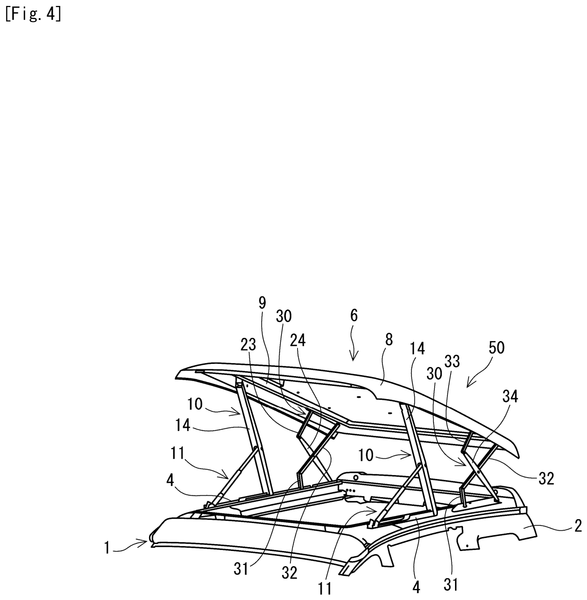

Fig. 4 to Fig. 8 illustrate the link mechanism of the roof tent.

The link mechanism couples the roof main body 8 to the base 4 so that the opening 5 can be opened and closed. The link mechanism includes first link mechanisms 10 disposed on a left and a right on a front side and second link mechanisms 30 disposed on the left and the right on a rear side.

The first link mechanism 10 is composed of an actuator 11 and a lever 14. One end of the lever 14 is rotatably attached to a frame 9 of the roof main body 8, and the other end is rotatably attached to a lateral edge of the base 4. One end of a cylinder 12 of the actuator 11 is coupled to a first coupling part 17, and this first coupling part 17 is coupled to the base 4. A tip end of a rod 13 is rotatably attached to a center portion of the lever 14.

The second link mechanisms 30 are attached on a left and a right of vehicle rear sides of the first link mechanisms 10, at the lateral edges of the base 4. One end of a first lever 31 is rotatably coupled to the base 4, the other end is rotatably coupled to one end of a first link 32, and the other end of the first link 32 is rotatably coupled to the frame 9 of the roof main body 8. A second link 34 including one end rotatably coupled to the base 4 is rotatably coupled to one end of a second lever 33 at the other end, which is rotatably coupled to the frame 9 of the roof main body 8 at the other end. A center of the first link 32 and a center of the second link 34 are rotatably coupled.

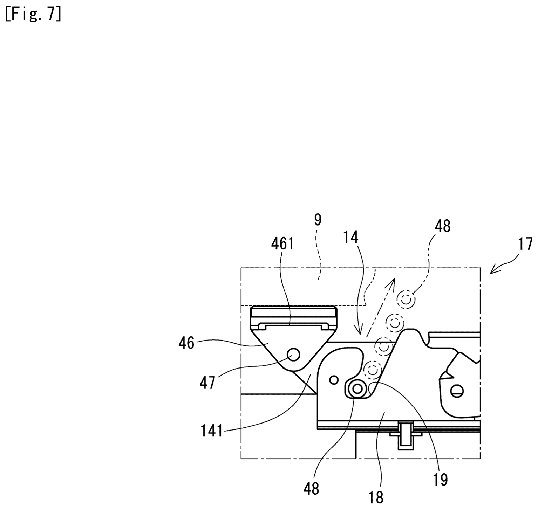

Fig. 7 illustrates a closed state of the roof main body. The first coupling part 17 of the first link mechanism 10 indicates a relationship with a fixed part 18 of the base 4 in which the roof main body is in the closed state.

A locking pin 48 of one end 141 of the lever 14 is engaged in a locking groove 19 of the fixed part 18. An end portion 461 of a third coupling part 46 rotatably attached to a pin 47 of the one end 141 of the lever 14 is fixed to the frame 9 attached to the roof main body 8.

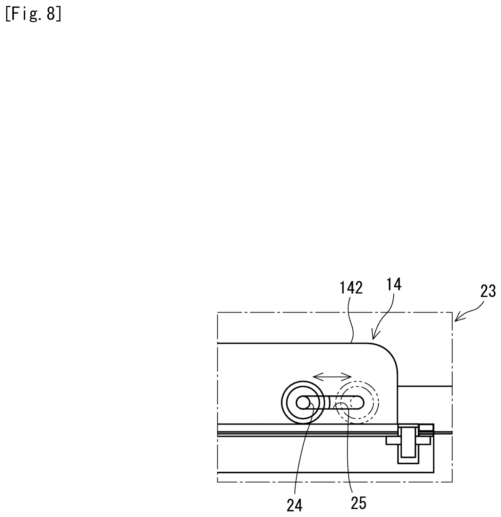

When the roof main body 8 opens, the locking pin 48 of the lever 14 is released from the locking groove 19 of the base 4 as indicated by a dashed line. At this time, in a second coupling part 23 of the base 4, a pin 24 of the other end 142 of the lever 14 moves in a right direction illustrated in Fig. 8 through a long hole 25 of the base 4, and subsequently the lever 14 rotates in a clockwise direction in Fig. 8.

The actuator 11 illustrated in Fig. 4, Fig. 5, and Fig. 6 includes an electric motor (not illustrated), such as a servo motor, in an interior of the cylinder 12, and a power transmission mechanism (not illustrated) that is linked to the electric motor and receives a driving force of the electric motor. The power transmission mechanism includes, for example, a motor shaft (not illustrated) of a servo motor (not illustrated), a threaded shaft (not illustrated) coupled to the motor shaft, a ball (not illustrated), a ball screw nut (not illustrated) accommodating the ball, and the rod 13 coupled to an end portion of the nut. By switching between forward rotation and backward rotation of the motor shaft, the rod 13 is extended and retracted. A position of the tip end of the rod 13 can be accurately controlled at high output by a cylinder having a small diameter.

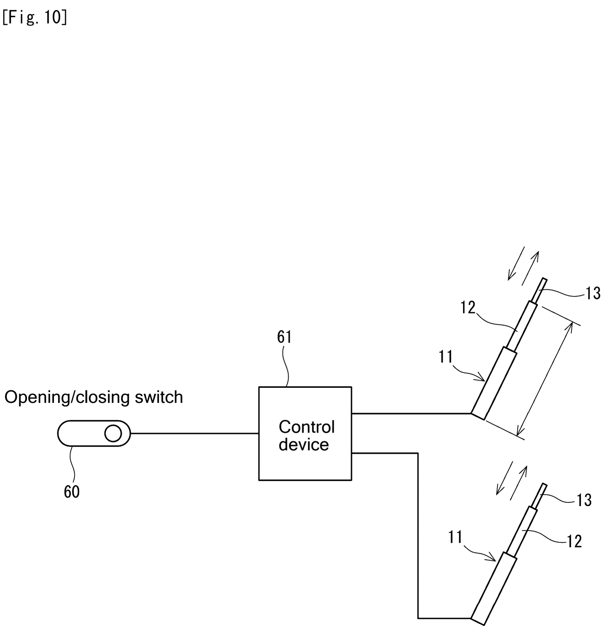

As illustrated in Fig. 10, a control device 61 is a device that controls switching between a state in which a tent part 50 is formed on the roof of the vehicle as illustrated in Fig. 1, and a state in which the first link mechanism 10 and the second link mechanism 30 are folded to store the tent part 50 in the vehicle. As illustrated in Fig. 10, the servo motor (not illustrated), including an opening/closing switch 60 provided in the vicinity of a driver's seat inside a vehicle cabin and the control device 61 that performs arithmetic processing in accordance with output of the opening/closing switch, performs forward rotation or backward rotation in accordance with output of the control device 61 after the arithmetic processing, extending and retracting the rod 13 through the power transmission mechanism (not illustrated). The roof main body 8 is controlled to a desired open/closed position through the first link mechanism 10 and the second link mechanism 30 illustrated in the Fig. 4, Fig. 5, and Fig. 6 mentioned above, which are coupled to the rod 13 that extends and retracts.

Output of the opening/closing switch 60 operates the control device 61, transmitting a drive signal to the servo motor of the actuator 11 so that the roof main body 8 transitions to an open state or the closed state corresponding to an intention of an operator.

When the operator turns the roof open switch to ON using the opening/closing switch 60, the control device 61 transmits a drive signal corresponding to roof open to the servo motor. The forward rotation of the servo motor then transmits a driving force through the power transmission mechanism to the link mechanism, which causes the roof main body to operate until reaching the open state. When the open state is detected, the rotational driving of the servo motor stops. When the operator turns the roof close switch to ON using the opening/closing switch 60, the control device 61 transmits a drive signal corresponding to roof close to the servo motor. The backward rotation of the servo motor then transmits a driving force through the power transmission mechanism to the link mechanism, which causes the roof main body to operate until reaching the closed state. When the closed state is detected, the rotational driving of the servo motor stops.

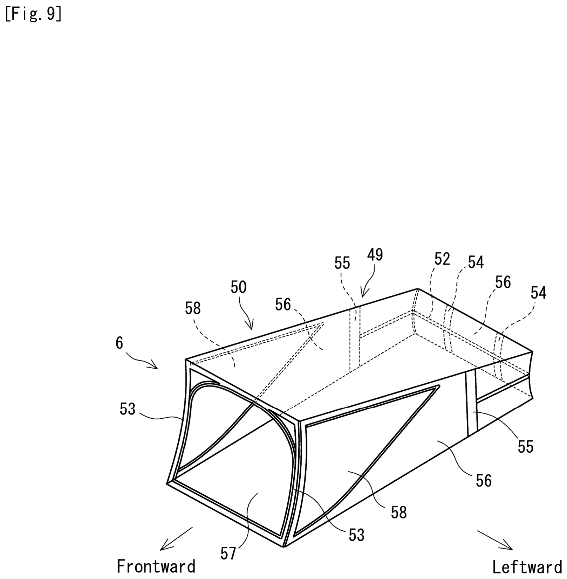

The tent part 50, as illustrated in Fig. 1 and Fig. 9, forms the open state illustrated in Fig. 9 with the roof main body 8 in the open state. The tent part 50 has a tent function in the open state.

The tent part 50 includes rubber bands 49, a fabric part 56, and meshes 57, 58. The rubber bands 49 include front rubber bands 53 on a left and a right of a front surface, rear rubber bands 54, side rubber bands 55 in a vertical direction on side surfaces, rubber bands 52 in a horizontal direction, and the like.

The fabric part 56 is formed in planar shapes on the side surfaces and a rear surface. The fabric part 56 plays a role of partitioning an interior and an exterior of the tent. This suppresses entry of rainwater, sunlight, and wind from the outside.

The front mesh 57 (window) is adhered between the front rubber bands 53 on both right and left sides, and the side meshes 58 (windows) are adhered to the side surfaces.

The rubber bands 49, the fabric part 56, and the meshes 57, 58 constituting the tent part 50 can be separated from the vehicle through detachable members such as fasteners (not illustrated), for example, from the base 4 and the roof main body 8. An attachment part attached to the base 4 and the roof main body 8, and the tent part 50 separable from this attachment part, are detachable by switching an opening/closing of the fasteners (not illustrated). The attachment part is provided to the fabric part 56. The fastener provided to the fabric part 56 is equivalent to a "detachable member."

The tent part 50, when transitioned from the open state of the roof main body 8 illustrated in Fig. 1 to the closed state, folds and, in coordination with the roof main body 8, is storable in a vehicle cabin interior of the roof edge 7 of the body 2 of the vehicle 1.

The tent part 50, when transitioned from the closed state of the roof main body 8 to the open state, transitions to the open state illustrated in Fig. 1 and Fig. 9 upon expansion of the fabric folded inside the vehicle cabin.

The front mesh 57 is detachable from the front rubber bands 53 by fasteners. In a state in which the front mesh 57 is separated from the front rubber bands 53 by the fasteners, a window that fully opens, inwardly and outwardly, a tent internal space inside the frame formed by the front rubber bands 53 is formed. In a state in which the front mesh 57 is mounted onto the front rubber bands 53, the front mesh 57, partially inwardly and outwardly open, is formed at the location corresponding to the window.

The tent part 50 having a function of being separable from the vehicle can be replaced with another tent part having another form, such as, for example, a different window position or size, or fabric type. The tent part has a function of being replaceable in accordance with the season. Alternatively, with the replacement function, it is possible to improve a comfort level of tent life with the vehicle by cleaning the tent part, changing the tent part to another tent part having a different design, or the like.

In this embodiment, the roof main body 8 is made of steel, as mentioned above. The roof main body 8 being made of steel similarly to the body 2 has a variety of advantages.

For example, with both the body 2 of the vehicle and the roof main body 8 being made of steel, a sense of incongruity between the appearance of the vehicle as a whole and the appearance of the roof main body is not caused to occur. This improves the aesthetics of the vehicle as a whole. In particular, when the roof main body 8 is set to the closed state or in a vehicle traveling state, there is no sense of separation at the boundary between the body 2 and the roof, causing the vehicle as a whole to exhibit a sense of unity in appearance and integrated aesthetics, thereby improving a commercial value of the vehicle with a roof tent.

Next, test results obtained by performing a characteristics test on the roof main body of the vehicle with a roof tent will be described.

### (1) Characteristics test

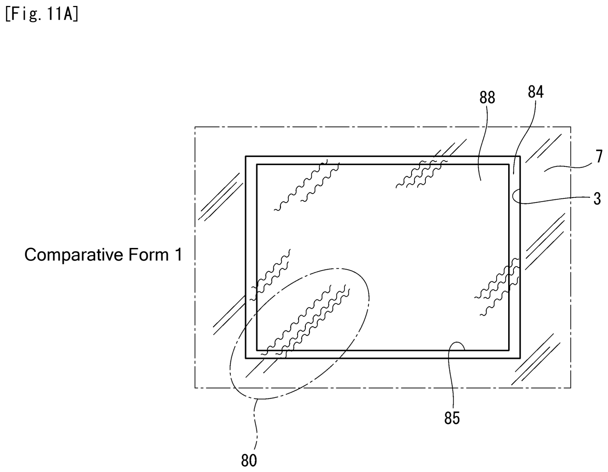

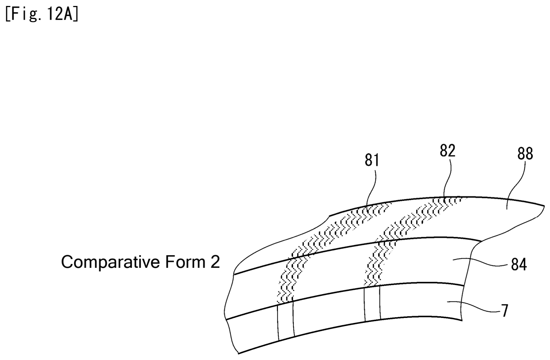

The roof main body 8 made of steel according to this embodiment was compared with a roof main body 88 made of FRP according to a comparative form (refer to Fig. 11A and Fig. 12A).

The roof main body 88 made of FRP according to the comparative form had a weight of 42.67 kg, a volume of 21,663 cm³, a total area of an upper surface of 86,974 cm², and a density of 1,970 kg/m³.

In contrast, the roof main body 8 made of steel according to this embodiment had a weight of 23.89 kg, a volume of 3,040 cm³, a total area of an upper surface of 86,929 cm², and a density of 7,860 kg/m³.

In comparison with the comparative form, this embodiment had a similar shape in appearance, but a plate thickness of the roof main body 8 was thin. The roof main body 8 made of steel was adapted, making it possible to achieve a significant reduction in thickness as compared with that of the comparative form. A volume of the roof main body 8 of a steel material was small, the total area of the upper surface of the roof main body 8 was substantially the same as that of the comparative form, the weight was light, and the roof main body 8 was high in density.

For the roof main body 8, with this embodiment being made of steel, comparative numerical data (dimensions, plate thickness, material, weight, and the like) indicating reduced thinness, increased density, reduced weight, and enhanced rigidity was achieved in the case of the roof main body 8 made of steel (this embodiment) as compared with the comparative form made of FRP.

According to this embodiment, the roof main body 8 coupled to the body 2 of the vehicle 1 and having high rigidity is made of steel and used as the roof of the tent, making it possible to form a tent roof with an upper surface having high rigidity and form a vehicle roof tent with a favorable living space below the roof main body 8. According to this embodiment, the weight applied to the vehicle body is relatively light as compared with that of the comparative form, improving fuel efficiency characteristics of the vehicle. This makes it possible to provide the roof tent 6 for a vehicle that achieves both reduced weight and high rigidity.

According to this embodiment, the tent part 50 is stored in the interior of the body 2 during normal periods and when the tent is not in use such as, for example, when the vehicle is normally stopped or in travel, and the tent part 50 can be automatically assembled on the roof of the vehicle by an ON operation of the opening/closing switch 60 when the tent is in use. Further, the tent part 50 can be folded and stored inside the body (vehicle cabin) by an OFF operation of the opening/closing switch 60. Accordingly, the vehicle moves to a destination, an appropriate location at the destination is selected, the vehicle moves to the location, and simple operations inside a driver's cabin are performed at the location, making it possible to enlarge the vehicle cabin internal space and create a comfortable, movable living space. The tent part is attached to the body of the vehicle, making it possible to reduce a workload during transport to the destination.

### (2) Appearance test

### Comparative Experiment 1 (sunlight exposure experiment)

A comparative experiment related to the appearance of the roof main body was conducted by exposing the roof main body 8 made of steel (Embodiment 1) and the roof main body 88 made of FRP (Comparative Form 1) to sunlight outdoors.

In the case of the roof main body 8 made of steel (Embodiment 1), as compared with Comparative Form 1, the surface was a curved surface having a beautiful finish that was free of irregularities, smooth, glossy, and free of distortion.

While the surface of the roof main body made of FRP was an irregular, wavy reflecting surface, the surface in Embodiment 1 was a smooth reflecting surface without irregularities and a wavy reflecting surface was not observed.

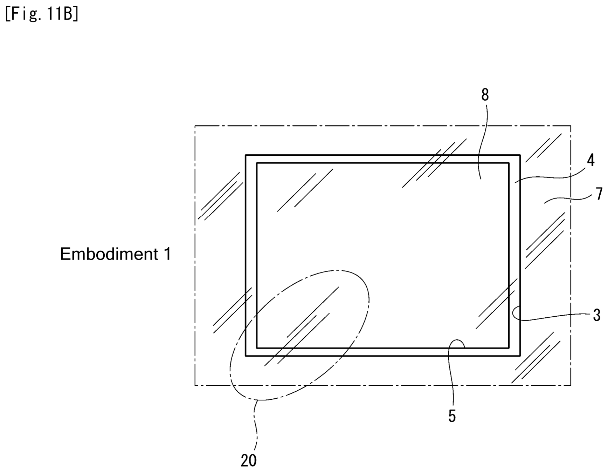

Here, schematic images comparing Comparative Form 1 made of FRP and Embodiment 1 made of steel for the evaluation of the finished surface when the roof main body 8 was made of steel are illustrated in Fig. 11A and Fig. 11B to explain a degree of visual beauty. In Comparative Form 1 illustrated in Fig. 11A, disturbances 80 of reflected light in wavy, thin lines appeared in regions of the roof main body 88 and a base 84. However, in Embodiment 1 illustrated in Fig. 11B, orderly patterns 20 of stable reflected light indicated by straight, thin lines 20 appeared from the roof main body 8 through the base 4 to the roof edge 7.

As illustrated in Fig. 11A, in Comparative Form 1, the surface of the roof main body 88 was observed as a wavy surface by light reflection. Here, in appearance, in Comparative Form 1, there was a difference between the material quality of the roof main body 88 and the material quality of the roof edge 7 (body) adjacent to the roof main body.

In Embodiment 1, as illustrated in Fig. 11B, the reflecting surface of light formed on the surface of the roof main body was a smooth surface, and conveyed a visually homogenous material quality with the reflecting surface of the vehicle body as a whole, including the roof edge 7 of the periphery of the roof main body 8.

The commercial value of the roof tent 6 for a vehicle was evaluated as significantly high for the roof main body 8 made of steel (Embodiment 1). While evaluations differ depending on personal preferences amid diverse values, at least a high demand for roof tents made of steel was revealed. In this regard, the commercial value of the roof tent for a vehicle according to this embodiment was evaluated as high.

### Comparative Experiment 2 (linear fluorescent light exposure experiment)

Comparative Experiment 2 compared stripe-shaped line patterns appearing on the reflecting surface of the roof main body when the roof main body was exposed to linear light, in a case of manufacture of the roof main body with FRP (Comparative Form 2) and in a case of manufacture of the roof main body with steel (Embodiment 2).

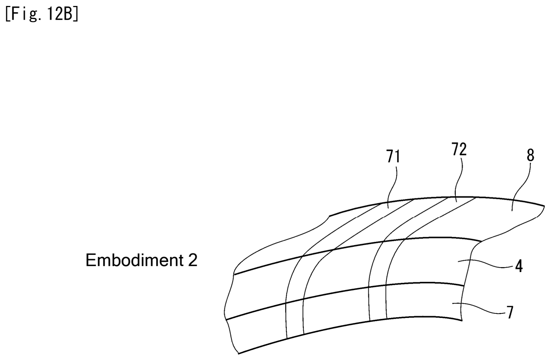

Comparative Form 2 of the roof main body 88 made of FRP and Embodiment 2 of the roof main body 8 made of steel were compared. Schematic images of the results are illustrated in Fig. 12A and Fig. 12B.

The two surfaces reflecting the linear light are, in Comparative Form 2 illustrated in Fig. 12A, reflecting surfaces 81, 82 having stripe shapes with jagged edges. In contrast, in Embodiment 2 illustrated in Fig. 12B, the surfaces are reflecting surfaces 71, 72 having smooth, clear stripe shapes with uniform widths, conveying the beauty of a stable, smooth surface.

The present disclosure has described a roof tent for a vehicle that includes a roof main body made of steel as one embodiment, but the roof tent for a vehicle may be a roof tent for a vehicle that includes a roof main body composed of a material other than steel, such as, for example, a metal material or an alloy material such as aluminum or an aluminum alloy.

In the present disclosure, the metal material or alloy material constituting the vehicle body and the metal material or the alloy material constituting the roof main body may be different metal materials or alloy materials. Metal materials or alloy materials, different from FRP, can be used to manufacture a roof main body having a smooth surface free of irregular waviness in appearance on the outer walls of the roof main body.

In the embodiments mentioned above, the metal material of the roof main body is steel. However, the present disclosure suggests that, even in a case in which the roof main body and the body of the periphery of the roof main body are manufactured using another metal material, these "have a material quality having high commercial value that is homogenous in appearance."

When the roof tent is set to the open state, a floor device (not illustrated) supporting an edge of a panel mat corresponding to a floor board member with respect to the body and fulfilling a function of blocking an opening by this panel mat as well as a floor function may be configured at the location corresponding to the opening 5 of the base 4. Further, the panel mat may be in a form separable from the body or may be a foldable multi-mat, or may be rotatably coupled to the roof main body. A floor device constituting a floor member separating the driver's cabin and the tent interior space can also be installed. When laid, the floor member can also be utilized for sleeping thereon, and thus serves as equipment enabling sleeping in the car.

As an example of an electric motor used as the driving source of the actuator, a servo motor is used in the embodiment. However, in the present disclosure, another type of electric motor may be used. For the power transmission mechanism that converts the driving force of the electric motor into an extension and retraction motion of the rod, in the present disclosure, a power transmission mechanism other than the ball screw used in the above-described embodiments may be adopted. As a result, as compared with a driving source such as an air cylinder or a hydraulic cylinder, an electric motor offers the advantages of being compact in size, facilitating provision of the actuator in a small space, facilitating effective utilization of the vehicle cabin internal space, being quiet during operation, and being easy to operate.

In the embodiments, the roof main body is a front-opening type that opens widely toward the front of the vehicle. However, the present disclosure may be applied to a rear-opening type embodiment in which the roof main body opens widely toward the rear of the vehicle.

The embodiments describe a form in which the roof main body is opened and closed by an actuator. However, the present disclosure may be one embodiment in which the roof main body is opened and closed by a manual operation by utilizing a spring damper and a link mechanism instead of the electric motor.

Herein, the roof main body composed of a metal material and the body composed of a metal material of the periphery of the roof main body are expressed as "having a material quality homogenous in appearance." These have the material quality homogenous in appearance to the extent that the material quality in the case of the roof main body manufactured with steel and the material quality in the case of the body manufactured with steel are indistinguishable.

The present disclosure is not limited to the above-described embodiments and can be implemented in various forms within a scope that does not deviate from the gist thereof.

The present disclosure has been described in accordance with the embodiments. However, the present disclosure is not limited to the embodiments and structures. The present disclosure also encompasses various modified examples and modifications within an equivalent range. Further, various combinations and forms as well as other combinations and forms, including one element thereof, one or more elements thereof, or one or less elements thereof, are also within the spirit and scope of the present disclosure.

## Claims

1. A roof tent for a vehicle that includes a tent capable of opening and closing a hole formed in a roof of a vehicle, the roof tent comprising:
a base (4) fixed to a roof edge (7) of a vehicle body (2);
a roof main body (8) composed of a metal material and capable of opening and closing an opening (5) of the base;
a link mechanism (10, 30) relatively movably coupling the roof main body to the base; and
a tent part (50) capable of being formed on a vehicle outer side of the opening of the base.

2. The roof tent for a vehicle according to claim 1, further comprising:
an actuator (11) that drives the roof main body with respect to the base.

3. The roof tent for a vehicle according to claim 2, wherein
the actuator includes a cylinder (12), a rod (13) capable of extending and retracting with respect to the cylinder, an electric motor that drives the rod with respect to the cylinder, and a link mechanism (10) that converts a rotational driving force of the electric motor into an extension and retraction motion of the rod.

4. The roof tent for a vehicle according to claim 1 or 2, wherein
the tent part includes a fabric part (56), and a detachable member that is freely detachable, separable from the fabric part from the base and the roof main body.

5. The roof tent for a vehicle according to claim 1 or 2, wherein
the tent part includes a window part (57, 58) that allows light to pass through an interior and an exterior of the tent part.

6. The roof tent for a vehicle according to claim 4, wherein
the fabric part includes a mesh (57, 58).

7. The roof tent for a vehicle according to claim 1 or 2, wherein
the roof main body composed of the metal material has a material quality homogenous in appearance with that of the vehicle body composed of a metal material of a periphery (7) of the roof main body.

8. The roof tent for a vehicle according to claim 1, wherein
the roof main body, the base, and the roof edge are made of steel.

9. A vehicle comprising:
a vehicle body including a roof hole (3);
a floor member capable of moving in a vehicle front-rear direction with respect to the vehicle body and capable of opening and closing the roof hole; and
the roof tent (6) for a vehicle according to any one of claims 1 to 3.
